# EUROPEAN PATENT APPLICATION

(11) **EP 1 154 013 A2**
(43) Date of publication of application: **14.11.2001**
(21) Application number: 01111451.9
(22) Date of filing: 10.05.2001
(51) Int. Cl.: C12G 3/02

(54) **Chelate-containing alcoholic beverage and method for preparing the same**

(30) Priority: 10.05.2000 JP 2000136810
(71) Applicant: Takeda, Iwao, Kamiina-gun, Nagano 399-4601 (JP); Tamiya, Hiroshi, Kawagoe-shi, Saitama 350-1101 (JP); Harada, Kaori, Kamiina-gun, Nagano 399-0424 (JP)
(72) Inventor: Takeda, Iwao, Kamiina-gun, Nagano 399-4601 (JP); Tamiya, Hiroshi, Kawagoe-shi, Saitama 350-1101 (JP); Harada, Kaori, Kamiina-gun, Nagano 399-0424 (JP)
(74) Representative: Bauer, Friedrich, Dipl.-Ing.

(57) **Abstract**

An alcoholic beverage is provided which contains 0.01 to 5 parts of a chelate compound by weight for improvement of the aroma and taste of the beverage and for derivation of enzymes to produce a detoxifying effect on carcinogenic substances and undesirable bacteria and viruses, and an antioxidative effect for reducing active oxygen in living bodies.

## Description

### BACKGROUND OF THE INVENTION

### Technical Field

The present invention relates to an intoxicating beverage, and in particular, an alcoholic beverage which can produce an antioxidative effect of internal substances when living bodies ingest the beverage.

### BACKGROUND ART

The Liquor Tax Law in Japan requires that alcoholic beverages should contain more than 1 % alcohol, such as refined sake, shochu (Japanese clear distilled liquor), beer, wine and the like. Aspergilli called as "koji" is added to steamed polished rice to prepare malted rice which is mixed with steamed polished rice, yeast fungi and water for fermentation. The mixture is fermented to generate a mash to produce refined sake by squeezing the mash. The yeast fungi are a large amount of propagated yeast to promote an alcoholic fermentation. Steamed rice and koji are mixed into water, and starch and protein contained in rice are bacterially decomposed into saccharide and amino acids of low molecular weight which provide yeast with nutritive substances. Then, yeast is inoculated on the decomposed substances to culture the yeast fungi. Generally, aspergilli are inoculated on cereal such as rice, wheat, soybean or the like for culture as well as alcoholic beverages. Japanese Patent Disclosure No. 10-234333 shows a manufacture of koji with prevention of the koji's discoloring by adding alum thereto to prepare the preferable colorless alcoholic beverages or transparent liquor such as refined sake because kojic acid contained in koji is susceptible to reaction with metallic ions for coloring the beverages.

In view of increasing demand in recent years by consumers for good taste and excellent aroma and diversification in quality of alcoholic beverages, glycerol has been used in a making process of Japanese liquor or "sake" with use of strain for producing a large amount of glycerol to season it because it is known that glycerol plays an important part in seasoning and flavoring of the liquor. For example, Japanese Patent Disclosure No. 9-206060 discloses a method for mellowing "sake" by immerging charcoal in sake solution to remove unnecessary flavor given during the brewing process and mature sake into good flavor. Also, Japanese Patent Disclosure No. 11-313664 shows alcoholic beverage which includes gallic acid as an antioxidation of the beverage to give a crisp, bitter, sour and/or mild flavor.

This liquor advantageously can produce good taste and excellent flavor in response to diversification in consumers' favorite, but such an intention is not directed to preservation and improvement of human health.

An object of the present invention is to provide alcoholic beverage which has good taste and excellent aroma, contain minerals necessary for maintenance of human health and keep the good alcoholic quality for a long period of time, in view of a fact that ingested minerals can derive enzymes which produce an antioxidative effect in human bodies.

### DISCLOSURE OF INVENTION

An alcoholic beverage according to the present invention comprises 0.01 to 5 parts of a chelate compound on the basis of weight to provide the beverage with rich taste and mellow aroma. The chelate compound is so chemically stable that it is not affected by aspergilli and other fungi in a fermentative process with mixing of the chelate compound in manufacture of the alcoholic beverage to prevent denaturation of the liquor such as discoloring resulted from deposition of metallic compounds in the fermentative process, maintaining rich taste and mellow aroma for a long period of time. When a living body ingests the alcoholic beverage, the chelate compound existing or mixed in the fermentative process, can derive at high yield enzymes of glutathione S-transferase (GST) molecular species and glutathione peroxidase (GPx) which catalyze the detoxicating reaction in visceral organs. The enzymes have a detoxifying effect, an antioxidative effect and a catalytic effect for reducing active oxygen, and specifically serve as a catalyst for reduction reaction wherein highly reactive electrophillic compounds such as active oxygen, hydrogen peroxide or organic peroxides are converted into water or alcohol, whereby the electrophile inhibits mutation, carcinogenesis and cell toxicity by forming a covalent bond with a nucleophillic potion of DNA or protein.

An amount of the chelate in alcoholic beverage under 0.01 part will generate no sufficient amount of the enzyme to generate rich taste and mellow aroma and an antioxidative effect. An amount of the chelate in alcoholic beverage over 5 parts will produce the beverage of undesirable deep color due to the excessive amount of the metal contained in the chelate.

The method for producing a chelate containing alcoholic beverage according to the present invention, comprises the steps of preparing a chelate compound; mixing the chelate compound with crops and aspergilli; fermenting the mixture at a fermentable temperature and humidity to provide an asperigilli solution; mixing the spergilli solution with crops for a further fermentation into a mash at a fermentable temperature, and squeezing the mash into a chelate-containing liquor. In preparing the chelate compound, amino, pentaric and acetic acids are or glyceric acid is dissolved in water to prepare an acid solution, and selenium trioxide or germanium acetate is dissolved in water to generate a water solution. Then, the water solution is added to the acid solution to form and agitate a mixture to which potassic, nitrogenous and phosphorous elements are added.

### BEST MODE FOR CARRYING OUT THE INVENTION

Detailed embodiments of the alcoholic beverage according to the present invention comprise 0.01 to 5 parts of the chelate compound on the basis of weight. Central metals for forming the chelate compound is one or more selected from the groups of calcium (Ca), magnesium (Mg), manganese (Mn), zinc (Zn), copper (Cu), molybdenum (Mo), iron (Fe), aluminum (Al), nickel (Ni), cobalt (Co), titanium (Ti), gallium (Ga), vanadium (V), chromium (Cr), silver (Ag), strontium (Sr), indium (In), tin (Sn), gold (Au) and zirconium (Zr), preferably selenium (Se) and germanium (Ge).

A starting material of the chelate compound may comprise, on the basis of weight, 0.01 to 4 parts of a metallic compound, 1 to 5 parts of an amino acid mixture, 2 to 8 parts of a potassic element, 0.1 to 1 part of a nitrogenous element, and 0.01 to 2 parts of a phosphorous element to provide the pH value of 6.0 to 7.5 when mixed with water. The amino acid mixture is selected from the group of saccharic and amino acids, fatty and amino acids or saccharic, fatty and amino acids. One of typical examples comprises, on the basis of weight, 0.03 to 2 parts of selenium trioxide as the chelate compound, 0.5 to 1.5 parts of amino acid, 0.5 to 1.5 parts of pentaric acid, 0.5 to 1.5 parts of acetic acid, 3 to 5 parts of a potassic element, 0.3 to 0.8 part of a nitrogenous element, and 0.5 to 1 part of a phosphorous element, to provide the pH value of 6.3 to 7.0 when mixed with water. Another typical example comprises, on the basis of weight, 0.05 to 2 parts of germanium acetate as the chelate compound, 1.5 to 2.5 parts of glyceric acid, 3 to 5 parts of potassic element, 0.3 to 0.8 parts of a nitrogenous element, and 0.5 to 1 part of a phosphorous element, to provide the pH value of 6.3 to 7.0 when mixed with water.

The metallic compound is one or more selected from groups of sulfate, chloride, nitrate, phosphate, acetate, carbonate, silicate, borate, oxide and hydroxide. The amino acid is one or more selected from groups of glycine, alanine, valine, arginine, lysine, aspartic acid, glutaminic acid, serine, threonine, tyrosine, methionine and cysteine. The preferable saccharic acid may include pentaric and hexalic acids which may include gluconic acid. The preferable fatty acid may include a saturated fatty acid such as formic, acetic, propionic, lauric, myristic, palmitic and stearic acids, and an unsaturated fatty acid such as acrylic, crotonic, oleic, sorbic, linoleic and linolenic acids.

Preferable potassic element may include potassium chloride, potassium sulfate, Carnallite (KCl · MgCl₂ · 6H₂O), potash ores (containing KCl or K₂SO₄), bittern potassium salt (KCl (+ NaCl + MgSO₄)), plant and wood ashes (K₂CO₃ + KHCO₃), kelp ashes (KCl + K₂SO₄), cement dust (sulfate, carbonate and silicate) and blast furnace dust (carbonate and sulfate). The preferable nitrogenous elements may include ammoniacal nitrogen such as ammonium sulfate ((NH₄)₂SO₄), ammonium chloride (NH₄Cl), ammonium nitrate (NH₄NO₃), ammonium phosphate ((NH₄)₂HPO₄, NH₄H₂PO₄), aqua ammonia (NH₄OH), ammoniated peat (organic acid ammonium salt), ammoniated calcium superphosphate (NH₄H₂PO₄ + (NH₄)₂SO₄ and the like), ammonium sulfate nitrate ((NH₄)₂SO₄ + NH₄NO₃), ammonium sulfate-phosphate (Ammophos) ((NH₄)₂SO₄ + (NH₄)₂HPO₄), ammonium sulfate phosphate ((NH₄)₂SO₄ + (NH₁)₂HPO₄), excrement (ammonium salt) and stable manure (ammonium salt); nitrate nitrogen such as ammonium nitrate (NH₄NO₃), Chile saltpeter (NaNO₃), nitrate of lime (Ca(NO₃)₂), potassium nitrate (KNO₃), ammonium sulfate nitrate ((NH₄)₂SO₄ + NH₄NO₃), nitrochalk (NH₄NO₃ + CaCO₃) and Calurea (Ca(NO₃)₂-4CO(NH₂)₂); cyanamide nitrogen such as lime nitrogen (CaCN₃); urea nitrogen such as urea (CO(NH₂)₂), and calurea (Ca(NO₃)₂ - 4CO(NH₂)₂); amino nitrogen such as urea-formaldehyde (Uraform) (CO(NH₂)₂-HCHO condensate), oxamide (NH₂-CO-CO-NH₂), guanylurea salt ([NH₂-C(NH)-NH-CO-NH₂] - X, where X is HCl, H₂SO₄, HNO₃, H₃PO₃ and the like), guanidine salt ([NH₂-C(NH)-NH₂] · X, where X is HCl, H₂SO₄, HNO₃, H₃PO₃ and the like) and ammoniated peat (containing CO(NH₂)₂); and protein nitrogen such as fish manure (containing NH₂, NH) and soybean cake (containing NH₂, NH). Preferable phosphorous element may contain calcium superphosphate (Ca(H₂PO₄)₂ + CaSO₄), concentrated superphosphate (Ca(H₂PO₄)₂), surpentine-superphosphate (calcium superphosphate + surpentine), fused magnesium phosphate (CaO-MgO-P₂O₅-SiO₂ glass), calcined phosphate (Ca₃(PO₄)₂-CaNaPO₄ solid solution), phosphate mixture (calcium superphosphate (concentrated superphosphate) + fused magnesium phosphate), ground phosphate rock (Ca₃(PO₄)₂), precipitated phosphate (CaHPO₄), ammonium sulfate phosphate ((NH₄)₂SO₄ + NH₄H₂PO₄), potassium sulfate ammonium phosphate ((NH₄)₂SO₄ + NH₄H₂PO₄ + K₂SO₄), ball fertilizer (ammonium sulfate + calcium superphosphate + potassium salt + peat, where the form of phosphate is Ca(H₂PO₄)₂), and compound fertilizer (Ca(H₂PO₄)₂, CaHPO₄, Ca₃(HPO₄)₂ and the like).

Processes are carried out by mixing the chelate compound made from the materials mentioned above, steamed cereal and aspergilli, fermenting the mixture at a temperature of 20 to 50 °C under a humidity of 70 to 90 % for 40 to 50 hours to generate a chelate-containing koji, mixing the resultant koji, yeast culture, steamed cereal and water, again fermenting the mixture to generate a mash or unrefined sake, and squeezing the mash to generate the chelate-containing alcoholic beverage. The cereal to be steamed is one or more selected from wheat, rice, soy bean or buckwheat noodles.

According to this embodiment, it has been found that the alcoholic beverage contains the chelate-containing complex easily absorbable into living bodies wherein the chelate is formed by amino acid, saccharic acid, fatty acid and metal; the koji can raise crops which contain the chelate; the crops are fermented to brew the chelate-containing koji; and the resultant alcoholic beverage has the good color, excellent aroma and delicious taste as well as antiseptic and fungicidal properties because it contains the chelate. When living bodies ingest the alcoholic beverage, the chelate in the liquor can generate in the living bodies enzymes for detoxifying active oxygen, hydrogen peroxide, organic peroxides, and carcinogenic substances with a resistance to oxidation, resulting in derivation of glutathione S-transferase (GST) molecular species in kidney and liver, and glutathione peroxidase (GPx) in kidney. Function and effect of alcoholic beverage according to the present invention are quite different from those of prior art alcoholic beverage and particularly are effective to detoxicate cancer.

The foregoing embodiment shows the chelate-containing alcoholic beverage generated by fermentation with the chelate-containing mixture. Alternatively, a chelate compound can be added to the alcoholic beverage after the fermentation. The present invention can be applied to beer, wine, fruit wine, whiskey, shochu or clear distilled liquor as well as refined sake.

Examples of the chelate-containing alcoholic beverages according to the present invention are described hereinafter wherein all parts are indicated based on weight.

### Example 1

Amino, pentaric and acetic acids, each 1 part, were dissolved in water of 3 parts to prepare an acid solution. Separately, selenium trioxide of 0.07 part was dissolved in water of 3 parts to generate a water solution which was then added to the acid solution and agitated for 60 minutes. In this case, there would be substantially no problem, if the mixture was agitated for approximately 30 minutes or over, however, it is desirable to agitate the mixture for 60 minutes or over to thoroughly temper and homogenize the chelate compound. Subsequently, plant and wood ashes (K₂CO₃, KHCO₃) of 4 parts as a potassic element were added to the mixture which was agitated for 60 minutes. Also, added to the mixture were ammonium sulfate ((NH₄)₂SO₄) of 0.5 parts as a nitrogenous element and calcium superphosphate (Ca(H₂PO₄)₂ + CaSO₄) of 1 part as a phosphorous element to obtain the chelate compound with the pH value adjusted to 6.6. 0.2 part of the chelate compound, 2 parts of steamed rice and 0.02 part of aspergilli were mixed and fermented at a temperature of 35 °C and a humidity of 90% for 48 hours to generate malted rice. Then, 0.2 parts of the prepared malted rice and 0.1 part of yeast culture were dissolved in the water 13.5 parts to prepare a koji solution into which 1.5 parts of steamed rice was mixed and fermented at a temperature of 10 °C into a mash. About 10 parts of rice sake including 0.018 part of the chelate compound was obtained by squeezing the mash.

### Example 2

An acid solution was prepared by dissolving 2 parts of glyceric acid in 3 parts of water, and separately 0.1 part of germanium acetate was dissolved in 3 parts of water by weight to obtain a water solution which was then added to the acid solution and agitated for sixty minutes or over for complete dissolution. Subsequently, 6 parts of kelp ashes (KCl + K₂SO₄) as a potassic element were added to the mixture which was agitated for sixty minutes. After that, 0.2 parts of aqua ammonia (NH₄OH) as a nitrogenous element and 0.06 part of ground phosphate rock (Ca₃(PO₄)₂) as a phosphorous element were added to the mixture to obtain the chelate compound with pH value adjusted to 7.1.

0.15 part of the chelate compound, 2 parts of steamed buckwheat noodle and 0.001 part of aspergilli were mixed and then fermented at a temperature of 34 degrees and a humidity of 89% for 45 hours to generate "soba koji" or malted Japanese noodle. 0.2 part of the soba koji and 0.2 part of yeast culture were dissolved in 15.5 parts of water to prepare a koji solution into which 1.5 parts of steamed soba were mixed and fermented at a temperature of 9 degrees to generate a mash. Therefore, about 13 parts of "soba sake" containing 0.014 part of chelate compound was obtained by squeezing the mash.

Two kinds of the obtained liquor with and without the chelate, were given for three weeks to F344 female rats of 7-weeks old whose liver and kidney were extracted. Then, comparison was made on color, aroma and taste of the alcoholic beverages, amount of the enzymes contained in the internal organs of the rats, antiseptic and fungus resistant properties, a detoxifying effect on carcinogenic substances and undesirable bacteria and viruses, and an oxidative effect regarding the enzymes in the following methods (1) to (3):
(1) Examining color, aroma and taste of the alcoholic beverages.
(2) Examining the antiseptic and fungus resistant properties of the alcoholic beverages left in glasses at the temperature of 30 °C.
(3) Measuring the amount of glutathione S-transferase (GST) molecular species and glutathione peroxidase (GPx) as enzyme. Each amount of the enzymes was determined as follows:

### (i) Preparation of samples for electrophoresis

Added to the extracted liver and kindney of the rats was 0.25 M sucrose 10 mM phosphate buffer solution of pH 7.4 in the amount three times of the weight of each piece for homogenization. 20% SDS of 50 microliters and PBS of 275 microliters were added to the homogenized pieces of 20 microliters, and the mixture was diluted with water into one tenth concentration to determine the total amount of protein by the Lowry method. A diluent was added to the samples to adjust the protein concentration of the mixture to 1 mg/ml, and after boiling the mixture for two minutes with heated water, 0.1% BPB of 50 microliters was added to the mixture to adjust electrophoresis samples.

### (ii) Electrophoresis

Electrophoresis was performed to separate the protein of the electrophoresis samples with 12,5% SDS-polyacrylamide gel (electrophoresis SDS-PAGE) until the protein migrated and passed stack gel at 28 mA, and migrated through separate gel at 36 mA for an hour.

### (iii) Imprinting (Western Blot)

Electric current was supplied to nitrocellulose membranes from a TRANS-BLOT CELL manufactured by BIO RAD under 80 Volts for two hours to imprint on the membranes the protein separated by the electrophoresis.

### (iv) Immunostaining

### (a) Blocking treatment

Nitrocellulose membranes were subjected to blocking treatment for an hour in a 3% skimmed milk TBS buffer solution of pH 7.4 for an hour.

### (b) Primary antibody

TBS buffer solution containing 3% bovine albumin (BSA) was added to rabbit polyclonal antibody manufactured by Biotrin International Limited which corresponds to any of the rGST A1 (Ya), rGST A3 (Yc), rGST A4 (Yk), rGST M1 (Yb1), rGST M2 (Yb2) and rGST P1 (Yp) for dilution. The dilution was washed for 5 minutes with the TBS buffer solution, two times for 5 minutes with the TBS buffer solution containing 0.05% Tween 20, and further for 5 minutes with the TBS buffer solution.

### (c) Secondary antibody

The anti-rabbit IgG goat antibody with a label of alkaline phosphatase manufactured by Jacson Immuno Research Laboratories, Inc. was diluted 1/5000 with the TBS buffer solution of pH 7.4, and after necessary reactions in the solution for an hour at room temperature, the dilution was washed similarly to the primary antibody.

### (d) Color development

Coloring reaction was made with a coloring reagent named "Nitro Blue Tetra" manufactured by Pierce Corporation.

### (v) Analysis

The developed color band of each sample was read into the Adobe Photo Shop of the photo retouching software to measure an intensity of the developed color band with NIH image analyzer. The resultant data were compared to examine derivation of the GST molecular species based on the significant difference assay (the t minus assay). The measurements for the GST molecular species were calculated in the form of intensity ratios (without dimension) assuming the intensity "1" of the developed color band regarding the liver and kidney of F344 female rats of 7 weeks old to which ordinary sake was given for 3 weeks instead of the chelate-containing sake.

Table 1 shows that Samples 1 and 2 are the sake with the chelate made from rice including selenium and made from soba including copper respectively, and a Blank is sake without the chelate. The marks (*) indicate significant differences of Samples 1 and 2 according to the present invention as compared to the Blank. In Table 1, Samples 1 and 2 obviously indicate advantageous results on good color, excellent aroma and delicious taste of the alcoholic beverages as well as the longer antiseptic and fungus resistant properties, compared to the Blank. Also, Samples 1 and 2 indicate larger amounts of formed enzymes glutathione S-transferase molecular (GST) species generated in the kidney and liver, compared to Blank. Samples 1 and 2 indicate larger amounts of enzymes, glutathione peroxidase (GPx) generated in the kidney, compared to Blank 1. As a result, it has been found that the alcoholic beverages fermented by mixture of the chelate and cereal koji according to the embodiment develop enzymes with a detoxifying effect on carcinogenic substances and undesirable bacteria and viruses, and an oxidative effect in living bodies.

**Table 1**

| Effect | Sample 1 | Sample 2 | Blank 1 |
|---|---|---|---|
| Color | Light brown | Very lighter brown | Transparent |
| Aroma | Mellow | Mellow | Ordinary |
| Taste | Rich | Rich | Ordinary |
| Anti-septic and fungus resistant properties | Muddied in white after 48 days | Muddied in white after 55 days | Muddied in white after 7 days |

| GST nmol/mg protein/min | | | |
|---|---|---|---|
| Kidney | 292 ± 21* | 301 ± 17* | 123 ± 22 |
| Liver | 1800 ± 181* | 1905 ± 167* | 910±86 |

| GPx mU/mg protein/min | | | |
|---|---|---|---|
| Liver | 276 ± 18* | 284 ± 20* | 224 ± 25 |

The chelate-containing alcoholic beverage according to the present invention can retain its fresh state with durable excellent aroma and good taste for a long period of time without deterioration in quality due to the antiseptic and fungus resistant properties. When people ingest the beverage, the chelate can generate enzymes which have a detoxifying effect on carcinogenic substances and undesirable bacteria and viruses, and an antioxidative effect in the living body to improve human health.

## Claims

1. An alcoholic beverage comprising 0.01 to 5 parts of a chelate compound on the basis of weight.

2. An alcoholic beverage according to claim 1, wherein a metal for forming said chelate compound is one or more selected from calcium, magnesium, manganese, zinc, copper, molybdenum, iron, aluminum, nickel, cobalt, titanium, gallium, selenium, germanium, vanadium, chromium, silver, strontium, indium, tin, gold and zirconium.

3. A method for producing a chelate containing alcoholic beverage, comprising the steps of preparing a chelate compound;
mixing a chelate compound with crops and aspergilli;
fermenting the mixture at a fermentable temperature and humidity to provide an asperigilli solution;
mixing said aspergilli solution with crops for a further fermentation into a mash at a fermentable temperature; and
squeezing the mash into a chelate-containing liquor.

4. A method for producing a chelate-containing alcoholic beverage according to claim 3, further comprising the steps of dissolving amino, pentaric and acetic acids in water to prepare an acid solution;
dissolving selenium trioxide in water to generate a water solution;
adding the water solution to the acid solution and agitating the mixture; and
adding potassic, nitrogenous and phosphorous elements to the mixture to obtain said chelate compound.

5. A method for producing a chelate-containing alcoholic beverage according to claim 3, wherein further comprising the steps of dissolving glyceric acid in water to prepare an acid solution;
dissolving germanium acetate in water to generate a water solution;
adding the water solution to the acid solution and agitating the mixture; and
adding potassic, nitrogenous and phosphorous elements to the mixture to obtain said chelate compound.
